# EUROPÄISCHE PATENTSCHRIFT

(11) **EP 4 269 853 B1**
(45) Veröffentlichungstag und Bekanntmachung des Hinweises auf die Patenterteilung: **08.10.2025**
(21) Anmeldenummer: 23160999.1
(22) Anmeldetag: 09.03.2023
(51) Int. Cl.: F16L 23/028, F16L 23/18, F16L 47/14

(54) **FLUIDLEITUNGSEINRICHTUNG**
FLUID CONDUIT DEVICE
DISPOSITIF DE CONDUITE DE FLUIDE

(30) Priorität: 29.04.2022 DE 102022204219
(43) Veröffentlichungstag der Anmeldung: 01.11.2023
(73) Patentinhaber: ContiTech Techno-Chemie GmbH, 61184 Karben (DE)
(72) Erfinder: Kempf, Dominik, 30165 Hannover (DE)
(74) Vertreter: Preusser, Andrea

(56) Entgegenhaltungen:
- WO-A1-2023/106774
- DE-U1- 202004 013 061

## Beschreibung

Die Erfindung betrifft eine Fluidleitungseinrichtung mit einem Kunststoffrohr, einer Verbindungshülse, welche in einem Überdeckungsbereich zwischen der Verbindungshülse und dem Kunststoffrohr stoffschlüssig und vorzugsweise fluiddicht mit dem Kunststoffrohr gefügt ist, und einem Metallflansch, welcher einen Fluiddurchlass aufweist, wobei sich die Verbindungshülse in den Fluiddurchlass erstreckt.

Ferner betrifft die Erfindung eine Klimaanlage zur Gebäude- oder Fahrzeugklimatisierung, mit einer Fluidleitungseinrichtung.

In einer Vielzahl von Anwendungsfällen, in welchen bisher Aluminiumrohre zur Fluidleitung eingesetzt wurden, ist zu beobachten, dass die Aluminiumrohre in der Praxis durch Kunststoffrohre ersetzt werden. Die Kunststoffrohre werden dabei häufig unter Verwendung von Axialdichtungen an Anschlussteile angeschlossen, wobei eine fluiddichte Verbindung zwischen dem Kunststoffrohr und dem Anschlussteil gewährleistet werden muss.

Die DE202004013061U1 zeigt einen spritzgegossenen Sattel für die Verbindung zwischen Gas-/Wasserrohren aus Polyethylen bestehend aus Polyethylen, das mit Elektronen-/Gammastrahlen behandelt wird, um es in vernetztes Polyethylen umzuwandeln, das dem Rohrmaterial zum Schweißen entspricht.

Aufgrund der Kriechneigung von Kunststoff besteht in der Praxis nun das Problem, dass die Dichtwirkung der Axialdichtung aufgrund des Kriechverhaltens des Kunststoffs und der damit einhergehenden Reduzierung der Dichtungsverpressung mit der Zeit nachlässt, wodurch unbeabsichtigte Leckagen auftreten können.

Die der Erfindung zugrundeliegende Aufgabe besteht also darin, die dauerhafte Abdichtung beim Anschluss von Kunststoffrohren zu verbessern.

Die Aufgabe wird gelöst durch eine Fluidleitungseinrichtung nach Anspruch 1. Die Verbindungshülse der erfindungsgemäßen Fluidleitungseinrichtung weist einen umlaufenden Kontaktsteg auf, wobei der umlaufende Kontaktsteg auf der dem Metallflansch abgewandten Seite eine Dichtungskontaktfläche aufweist, welche in Kontakt mit einer umlaufenden Axialdichtung steht.

Die Axialdichtung wird beim Anschließen des Kunststoffrohrs an ein Anschlussteil auf der dem Kontaktsteg abgewandten Seite mit dem Anschlussteil in Kontakt gebracht. Das Anschlussteil kann beispielsweise ein Gegenflansch zum Metallflansch oder ein Anschlussteil einer fluidtechnischen Einrichtung, beispielsweise ein Anschlussteil eines Wärmetauschers, eines Verdampfers, eines Kompressors oder einer Pumpe, sein.

Die Steghöhe des Kontaktstegs definiert den Axialabstand zwischen dem Metallflansch und der Axialdichtung.

Die Verbindungshülse ist aus Kunststoff ausgebildet. Lediglich die Kriechvorgänge im Bereich des Kontaktstegs führen zu einer Beeinträchtigung der Dichtwirkung der Axialdichtung. Kriechvorgänge in Kunststoffkomponenten führen zwar grundsätzlich zu einem Festigkeitsverlust und können somit zu einer Deformation der Kunststoffkomponente führen, im vorliegenden Fall können jedoch nur die Kriechvorgänge in dem Kontaktsteg zu einer Beeinträchtigung der Dichtwirkung führen. Die Kriechvorgänge in dem Kontaktsteg sind aber nicht dazu geeignet, die Dichtungsverpressung in einem erheblichen Maße zu beeinflussen, sodass die konstruktionsbedingte Reduktion der die Dichtwirkung beeinflussenden Kriechvorgänge auf den Kontaktsteg zu einer dauerhaft haltbaren und dichten Fluidverbindung führt.

Der Metallflansch der Fluidleitungseinrichtung ist vorzugsweise aus Aluminium ausgebildet. Das Kunststoffrohr der Fluidleitungseinrichtung ist vorzugsweise zylindrisch ausgebildet.

Die erfindungsgemäße Fluidleitungseinrichtung wird dadurch vorteilhaft weitergebildet, dass der Kontaktsteg auf der dem Metallflansch zugewandten Seite eine Flanschkontaktfläche aufweist, welche in Kontakt mit dem Metallflansch steht. Der Kontaktsteg ist also zwischen der Axialdichtung und dem Metallflansch angeordnet. Die Flanschkontaktfläche und die Dichtungskontaktfläche sind umlaufende Kontaktflächen. Die Flanschkontaktfläche und die Dichtungskontaktfläche sind ringförmig und/oder verlaufen parallel zueinander.

Es ist ferner eine erfindungsgemäße Fluidleitungseinrichtung vorteilhaft, bei welcher die Verbindungshülse aus einem faserverstärkten Kunststoff ausgebildet ist. Beispielsweise ist die komplette Verbindungshülse aus einem faserverstärkten Kunststoff ausgebildet. Zumindest ist jedoch der Kontaktsteg der Verbindungshülse aus einem faserverstärkten Kunststoff ausgebildet.

Durch die Faserverstärkung wird die Kriechneigung der Verbindungshülse bzw. des Kontaktstegs weiter verringert. Die Fasern des faserverstärkten Kunststoffs können Glasfasern, Karbonfasern und/oder Aramidfasern sein.

Es ist darüber hinaus eine erfindungsgemäße Fluidleitungseinrichtung bevorzugt, bei welcher die Axialdichtung einen umlaufenden und verformbaren Dichtring und eine mit dem Dichtring verbundene Stützstruktur aufweist, welche die Deformation des Dichtrings in Axialrichtung begrenzt. Die Stützstruktur kann ein metallischer Stützring sein. Die Axialdichtung weist vorzugsweise ein definiertes Kompressionsmaß auf, welches von der Höhe der Stützstruktur vorgegeben ist. Der umlaufende verformbare Dichtring kann eine pfeilförmige Gummilippe sein. Die Axialdichtung kann ein sogenannter slim-line-seal-washer sein.

In einer bevorzugten Ausführungsform der erfindungsgemäßen Fluidleitungseinrichtung befindet sich die Verbindungshülse in dem Überdeckungsbereich innenseitig des Kunststoffrohrs. Die Verbindungshülse ist also in einen Endbereich des Kunststoffrohrs eingesetzt. Das außenliegende Kunststoffrohr kann in den Fluiddurchlass des Metallflansches eingepresst sein. Alternativ kann zwischen dem Kunststoffrohr und der Innenkontur des Fluiddurchlasses des Metallflansches Spiel vorhanden sein.

In einer weiteren bevorzugten Ausführungsform der erfindungsgemäßen Fluidleitungseinrichtung befindet sich die Verbindungshülse in dem Überdeckungsbereich außenseitig des Kunststoffrohrs. Ein Endbereich des Kunststoffrohrs ist also in die Verbindungshülse eingesetzt. Die außenliegende Verbindungshülse kann in den Fluiddurchlass des Metallflansches eingepresst sein. Alternativ kann zwischen der Verbindungshülse und der Innenkontur des Fluiddurchlasses des Metallflansches Spiel vorhanden sein.

In einer anderen Ausführungsform der erfindungsgemäßen Fluidleitungseinrichtung weist das Kunststoffrohr im Überdeckungsbereich eine Aufweitung oder eine Einschnürung auf. Durch die Aufweitung oder Einschnürung im Überdeckungsbereich kann ein Querschnittssprung, insbesondere ein Durchmessersprung, im Übergang zum Überdeckungsbereich vermieden werden. Abhängig davon, ob die Verbindungshülse in dem Überdeckungsbereich innenseitig oder außenseitig des Kunststoffrohrs angeordnet ist, und ob das Kunststoffrohr im Überdeckungsbereich eine Aufweitung oder Einschnürung aufweist, kann beispielsweise ein konstanter Innendurchmesser für eine möglichst widerstandsfreie Fluidströmung oder ein konstanter Außendurchmesser im Falle von konstruktionsbedingt vorhandenen Bauraumeinschränkungen umgesetzt werden.

Es ist darüber hinaus eine erfindungsgemäße Fluidleitungseinrichtung vorteilhaft, bei welcher die Verbindungshülse und das Kunststoffrohr in dem Überdeckungsbereich miteinander verschweißt sind. Die Verbindungshülse und das Kunststoffrohr sind im Überdeckungsbereich also mittels einer Schweißverbindung miteinander verbunden. Die Schweißverbindung ist vorzugsweise fluiddicht. Die Schweißverbindung ist vorzugsweise umlaufend. Die Schweißverbindung kann einfach oder mehrfach umlaufend ausgeführt sein. Die Schweißverbindung kann eine Reibschweißverbindung sein. In diesem Fall wurden die Verbindungshülse und das Kunststoffrohr mittels Reibschweißen miteinander verbunden. Die Schweißverbindung kann ferner eine Laserschweißverbindung sein. In diesem Fall wurden die Verbindungshülse und das Kunststoffrohr mittels Laserschweißen miteinander verbunden.

Es ist darüber hinaus eine erfindungsgemäße Fluidleitungseinrichtung vorteilhaft, bei welcher die Verbindungshülse und/oder das Kunststoffrohr in dem Überdeckungsbereich zumindest abschnittsweise transparent ausgebildet sind. Durch die transparente Ausbildung ist die Verbindungshülse und/oder das Kunststoffrohr durchlässig für einen Laserschweißstrahl. Wenn der Laserschweißstrahl von radial außen auf den Überdeckungsbereich trifft, ist das außenseitige Teil zumindest abschnittsweise transparent auszuführen. Je nach Ausführungsform kann die Verbindungshülse oder das Kunststoffrohr im Überdeckungsbereich außenliegend sein. Wenn der Schweißlaserstrahl von innen auf den Überdeckungsbereich trifft, ist das innenseitige Teil zumindest abschnittsweise transparent auszuführen. Je nach Ausführungsform kann die Verbindungshülse oder das Kunststoffrohr innenliegend sein. Alternativ kann die Schweißverbindung in einem Kehlbereich erzeugt sein, sodass es nicht erforderlich ist, dass der Schweißlaserstrahl die Verbindungshülse und/oder das Kunststoffrohr durchdringt. Somit ist es nicht erforderlich, dass die Verbindungshülse und das Kunststoffrohr in dem Überdeckungsbereich transparent ausgebildet sind.

Die der Erfindung zugrundeliegende Aufgabe wird ferner durch eine Klimaanlage der eingangs genannten Art gelöst, wobei die Fluidleitungseinrichtung der erfindungsgemäßen Klimaanlage nach einer der vorstehend beschriebenen Ausführungsformen ausgebildet ist. Hinsichtlich der Vorteile und Modifikationen der erfindungsgemäßen Klimaanlage wird auf die Vorteile und Modifikationen der erfindungsgemäßen Fluidleitungseinrichtung verwiesen.

Nachfolgend werden bevorzugte Ausführungsformen der Erfindung unter Bezugnahme auf die beiliegenden Figuren näher erläutert und beschrieben. Dabei zeigen:
- Fig. 1: eine erfindungsgemäße Fluidleitungseinrichtung in einer schematischen Schnittdarstellung; und
- Fig. 2: eine weitere erfindungsgemäße Fluidleitungseinrichtung in einer schematischen Schnittdarstellung.

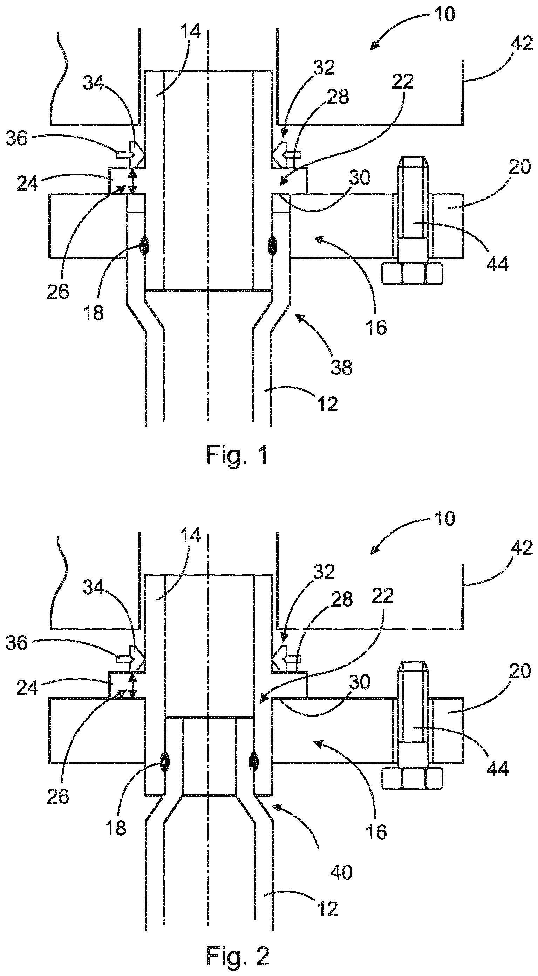

Die Fig. 1 zeigt eine Fluidleitungseinrichtung 10 mit einem zylindrischen Kunststoffrohr 12 und einer Verbindungshülse 14.

Die Verbindungshülse 14 ist aus einem faserverstärkten Kunststoff ausgebildet. Der faserverstärkte Kunststoff der Verbindungshülse 14 kann beispielsweise Glasfasern, Karbonfasern und/oder Aramidfasern umfassen.

Die Verbindungshülse 14 ist in einem Überdeckungsbereich 16 zwischen der Verbindungshülse 14 und dem Kunststoffrohr 12 stoffschlüssig und fluiddicht mit dem Kunststoffrohr 12 gefügt. Die Fügeverbindung 18 zwischen dem Kunststoffrohr 12 und der Verbindungshülse 14 ist vorliegend einfach umlaufend ausgeführt, kann in anderen Ausführungsformen aber auch mehrfach umlaufend sein. Die Verbindungshülse 14 und das Kunststoffrohr 12 sind in dem Überdeckungsbereich 16 miteinander laserverschweißt, sodass die Fügeverbindung 18 eine Laserschweißverbindung ist.

Zum Erzeugen der Fügeverbindung 18 kann ein Laserschweißstrahl entweder von radial innen oder von radial außen auf die Fügestelle gerichtet werden. Wenn die Verschweißung von innen erfolgt, ist die Verbindungshülse 14 zumindest im Bereich der Fügeverbindung 18 transparent ausgebildet, sodass die Laserschweißstrahlen durch die Verbindungshülse 14 zur Fügestelle gelangen können. Wenn der Schweißvorgang von außen erfolgt, ist das Kunststoffrohr 12 zumindest im Bereich der Fügestelle transparent ausgebildet, sodass die Laserschweißstrahlen durch das Kunststoffrohr 12 zur Fügestelle gelangen können.

Die Fluidleitungseinrichtung 10 umfasst ferner einen Metallflansch 20. Der Metallflansch 20 ist ein Aluminiumflansch und weist einen Fluiddurchlass 22 auf. Die Verbindungshülse 14 erstreckt sich in den Fluiddurchlass 22 hinein.

Die Verbindungshülse 14 umfasst einen umlaufenden Kontaktsteg 24, wobei der umlaufende Kontaktsteg 24 eine Steghöhe 26 aufweist. Der umlaufende Kontaktsteg 24 weist auf der dem Metallflansch 20 abgewandten Seite eine Dichtungskontaktfläche 28 auf. Ferner weist der umlaufende Kontaktsteg 24 auf der dem Metallflansch 20 zugewandten Seite eine Flanschkontaktfläche 30 auf. Die Dichtungskontaktfläche 28 steht in Kontakt mit einer umlaufenden Axialdichtung 32. Die umlaufende Flanschkontaktfläche steht in Kontakt mit dem Metallflansch 20. Die Flanschkontaktfläche 30 und die Dichtungskontaktfläche 28 sind aufgrund der Steghöhe 26 voneinander beabstandet und verlaufen parallel zueinander.

Die Axialdichtung 32 wird auf der dem Kontaktsteg 24 abgewandten Seite mit einem Anschlussteil 42 in Kontakt gebracht. Das Anschlussteil 42 kann ein Gegenflansch für den Metallflansch 20 sein. Alternativ kann das Anschlussteil 42 Bestandteil einer fluidtechnischen Einrichtung sein, beispielsweise ein Anschlussteil eines Wärmetauschers, eines Verdampfers, eines Kompressors oder einer Pumpe.

Die Steghöhe 26 des Axialstegs 24 definiert den Axialabstand zwischen dem Metallflansch 20 und der Axialdichtung 32. Lediglich die Kriechvorgänge im Bereich des Kontaktstegs 24 führen zu einer Beeinträchtigung der Dichtwirkung der Axialdichtung 32 über die Zeit. Somit wird trotz der Verwendung eines Kunststoffrohrs 12 eine Fluidverbindung ermöglicht, welche eine dauerhafte Dichtigkeit gewährleistet und nicht oder nur unwesentlich von Kriechvorgängen beeinträchtigt wird.

Die Axialdichtung 32 weist einen umlaufenden verformbaren Dichtring 34 und eine mit dem Dichtring 34 verbundene Stützstruktur 36 auf. Die Stützstruktur 36 begrenzt die Deformation des Dichtrings 34 in Axialrichtung, wenn die Axialdichtung 32 zwischen dem Kontaktsteg 24 der Verbindungshülse 14 und dem Anschlussteil 42 verpresst wird. Zum Verpressen kann der Metallflansch 20 eine oder mehrere Ausnehmungen umfassen, durch welche sich Befestigungsglieder 44, wie beispielsweise Schrauben, erstrecken. Mittels der Befestigungsglieder 44 kann der Metallflansch 20 an dem Anschlussteil 42 befestigt werden, sodass eine Kompression der Axialdichtung 32 erfolgt. Das Kompressionsmaß der Axialdichtung 32 ist aufgrund der Bauhöhe der Stützstruktur 36 vorgegeben. Die Stützstruktur 36 kann ein metallischer Stützring sein. Der Dichtring 34 kann eine pfeilförmige Gummilippe sein. Die Axialdichtung 32 kann als sogenannter flacher seal-washer ausgebildet sein.

Das Kunststoffrohr 12 weist im Überdeckungsbereich 16 eine Aufweitung 38 auf. Die Verbindungshülse 14 ist in das Kunststoffrohr 12 eingesetzt und befindet sich somit in dem Überdeckungsbereich 16 innenseitig des Kunststoffrohrs 12. Das Kunststoffrohr 12 ist in den Fluiddurchlass 22 des Metallflansches 20 eingepresst. Alternativ kann zwischen dem Kunststoffrohr 12 und der Innenkontur des Fluiddurchlasses 22 jedoch auch Spiel vorhanden sein.

Die Fig. 2 zeigt eine alternative Fluidleitungseinrichtung 10, wobei das Kunststoffrohr 12 anstatt einer Aufweitung 38 eine Einschnürung 40 aufweist.

Das Kunststoffrohr 12 ist in die Verbindungshülse 14 eingesetzt, sodass sich die Verbindungshülse 14 in dem Überdeckungsbereich 16 außenseitig des Kunststoffrohrs 12 befindet. Die Verbindungshülse 14 ist in den Fluiddurchlass 22 des Metallflansches 20 eingepresst. In einer alternativen Ausführungsform kann zwischen der Verbindungshülse 14 und der Innenkontur des Fluiddurchlasses 22 auch Spiel vorhanden sein.

Zum Erzeugen der Fügeverbindung 18 kann ein Laserschweißstrahl entweder von radial innen oder von radial außen auf die Fügestelle gerichtet werden. Wenn die Verschweißung von innen erfolgt, ist das Kunststoffrohr 12 zumindest im Bereich der Fügeverbindung 18 transparent ausgebildet, sodass die Laserschweißstrahlen durch das Kunststoffrohr 12 zur Fügestelle gelangen können. Wenn der Schweißvorgang von außen erfolgt, ist die Verbindungshülse 14 zumindest im Bereich der Fügestelle transparent ausgebildet, sodass die Laserschweißstrahlen durch die Verbindungshülse 14 zur Fügestelle gelangen können.

### Bezugszeichenliste

- 10: Fluidleitungseinrichtung
- 12: Kunststoffrohr
- 14: Verbindungshülse
- 16: Überdeckungsbereich
- 18: Fügeverbindung
- 20: Metallflansch
- 22: Fluiddurchlass
- 24: Kontaktsteg
- 26: Steghöhe
- 28: Dichtungskontaktfläche
- 30: Flanschkontaktfläche
- 32: Axialdichtung
- 34: Dichtring
- 36: Stützstruktur
- 38: Aufweitung
- 40: Einschnürung
- 42: Anschlussteil
- 44: Befestigungsglied

## Patentansprüche

1. Fluidleitungseinrichtung (10), mit
- einem Kunststoffrohr (12),
- einer Verbindungshülse (14), welche in einem Überdeckungsbereich (16) zwischen der Verbindungshülse (14) und dem Kunststoffrohr (12) stoffschlüssig und vorzugsweise fluiddicht mit dem Kunststoffrohr (12) gefügt ist; und
- einem Metallflansch (20), welcher einen Fluiddurchlass (22) aufweist, wobei sich die Verbindungshülse (14) in den Fluiddurchlass (22) erstreckt;
wobei die Verbindungshülse (14) einen umlaufenden Kontaktsteg (24) aufweist, wobei der umlaufende Kontaktsteg (24) auf der dem Metallflansch (20) abgewandten Seite eine umlaufende Dichtungskontaktfläche (28) aufweist, welche in Kontakt mit einer umlaufenden Axialdichtung (32) steht,
wobei der Kontaktsteg (24) auf der dem Metallflansch (20) zugewandten Seite eine umlaufende Flanschkontaktfläche (30) aufweist, welche in Kontakt mit dem Metallflansch (20) steht,
**dadurch gekennzeichnet, dass** der Kontaktsteg (24) aus einem faserverstärkten Kunststoff ausgebildet ist.

2. Fluidleitungseinrichtung (10) nach Anspruch 1,
**dadurch gekennzeichnet, dass** die Verbindungshülse (14) aus einem faserverstärkten Kunststoff ausgebildet ist.

3. Fluidleitungseinrichtung (10) nach Anspruch 1 oder 2,
**dadurch gekennzeichnet, dass** die Axialdichtung (32) einen umlaufenden und verformbaren Dichtring (34) und eine mit dem Dichtring (34) verbundene Stützstruktur (36) aufweist, welche die Deformation des Dichtrings (34) in Axialrichtung begrenzt.

4. Fluidleitungseinrichtung (10) nach einem der vorstehenden Ansprüche,
**dadurch gekennzeichnet, dass** sich die Verbindungshülse (14) in dem Überdeckungsbereich (16) innenseitig des Kunststoffrohrs (12) befindet.

5. Fluidleitungseinrichtung (10) nach einem der Ansprüche 1 bis 2,
**dadurch gekennzeichnet, dass** sich die Verbindungshülse (14) in dem Überdeckungsbereich (16) außenseitig des Kunststoffrohrs (12) befindet.

6. Fluidleitungseinrichtung (10) nach einem der vorstehenden Ansprüche,
**dadurch gekennzeichnet, dass** das Kunststoffrohr (12) im Überdeckungsbereich (16) eine Aufweitung (38) oder eine Einschnürung (40) aufweist.

7. Fluidleitungseinrichtung (10) nach einem der vorstehenden Ansprüche,
**dadurch gekennzeichnet, dass** die Verbindungshülse (14) und das Kunststoffrohr (12) in dem Überdeckungsbereich (16) miteinander verschweißt sind.

8. Fluidleitungseinrichtung (10) nach einem der vorstehenden Ansprüche,
**dadurch gekennzeichnet, dass** die Verbindungshülse (14) und/oder das Kunststoffrohr (12) in dem Überdeckungsbereich (16) zumindest abschnittsweise transparent ausgebildet sind.

9. Klimaanlage zur Gebäude- oder Fahrzeugklimatisierung, mit
- einer Fluidleitungseinrichtung (10);
**dadurch gekennzeichnet, dass** die Fluidleitungseinrichtung (10) nach einem der vorstehenden Ansprüchen ausgebildet ist.

## Claims

1. Fluid line equipment (10), with
- a plastic pipe (12),
- a connecting sleeve (14), which is joined to the plastic pipe (12) in a material-tight and preferably fluid-tight manner in a covering area (16) between the connecting sleeve (14) and the plastic pipe (12); and
- a metal flange (20), which has a fluid passage (22), wherein the connecting sleeve (14) extends into the fluid passage (22);
wherein the connecting sleeve (14) has a circumferential contact bar (24), wherein the circumferential contact bar (24) on the side facing away from the metal flange (20) has a circumferential sealing contact surface (28), which is in contact with a circumferential axial seal (32),
wherein the contact bar (24) on the side facing the metal flange (20) has a circumferential flange contact surface (30), which is in contact with the metal flange (20),
**characterized by** the fact that the contact bar (24) is made of a fiber-reinforced plastic.

2. Fluid line device (10) according to claim 1,
**characterized by** the fact that the connecting sleeve (14) is made of a fiber-reinforced plastic.

3. Fluid line device (10) according to claim 1 or 2,
**characterized in that** the axial seal (32) has a circumferential and deformable sealing ring (34) and a support structure (36) connected to the sealing ring (34), which limits the deformation of the sealing ring (34) in the axial direction.

4. Fluid line device (10) according to any of the preceding claims,
**characterized in that** the connecting sleeve (14) is located in the overlap area (16) on the inside of the plastic pipe (12).

5. Fluid line device (10) according to any one of claims 1 to 2,
**characterized in that** the connecting sleeve (14) is located in the covering area (16) on the outside of the plastic pipe (12).

6. Fluid line device (10) according to any of the preceding claims,
**characterized in that** the plastic pipe (12) has a widening (38) or a constriction (40) in the cover area (16).

7. Fluid line device (10) according to any of the preceding claims,
**characterized in that** the connecting sleeve (14) and the plastic pipe (12) are welded together in the cover area (16).

8. Fluid line device (10) according to any of the preceding claims,
**characterised in that** the connecting sleeve (14) and/or the plastic pipe (12) are transparent in the covering area (16), at least in sections.

9. Air conditioning for building or vehicle air conditioning, with
- a fluid line device (10);
**characterized in that** the fluid line device (10) is designed according to one of the above claims.

## Revendications

1. Équipement de conduite de fluide (10), avec
- un tuyau en plastique (12),
- un manchon de raccordement (14), qui est assemblé au tuyau en plastique (12) de manière étanche au matériau et de préférence étanche aux fluides dans une zone de recouvrement (16) entre le manchon de raccordement (14) et le tuyau en plastique (12) ; et
- une bride métallique (20), qui a un passage de fluide (22), dans lequel le manchon de raccordement (14) se prolonge dans le passage de fluide (22) ;
dans lequel le manchon de raccordement (14) a une barre de contact circonférentielle (24), dans lequel la barre de contact circonférentielle (24) du côté opposé à la bride métallique (20) a une surface de contact d'étanchéité circonférentielle (28), qui est en contact avec un joint axial circonférentiel (32),
dans lequel la barre de contact (24) du côté faisant face à la bride métallique (20) a une surface de contact de bride circonférentielle (30), qui est en contact avec la bride métallique (20),
**caractérisée par le fait que** la barre de contact (24) est en plastique renforcé de fibres.

2. Dispositif de conduite de fluide (10) selon la revendication 1,
**caractérisé par le fait que** le manchon de raccordement (14) est en plastique renforcé de fibres.

3. Dispositif de conduite de fluide (10) selon la revendication 1 ou 2,
**caractérisé en ce que** le joint axial (32) est constitué d'une bague d'étanchéité circonférentielle et déformable (34) et d'une structure de support (36) reliée à la bague d'étanchéité (34), ce qui limite la déformation de la bague d'étanchéité (34) dans le sens axial.

4. Dispositif de conduite de fluide (10) selon l'une quelconque des revendications précédentes,
**caractérisé en ce que** le manchon de raccordement (14) est situé dans la zone de chevauchement (16) à l'intérieur du tuyau en plastique (12).

5. Dispositif de conduite de fluide (10) selon l'une quelconque des revendications 1 à 2,
**caractérisé en ce que** le manchon de raccordement (14) est situé dans la zone de couverture (16) à l'extérieur du tuyau en plastique (12).

6. Dispositif de conduite de fluide (10) selon l'une quelconque des revendications précédentes,
**caractérisé en ce que** le tuyau en plastique (12) présente un élargissement (38) ou un rétrécissement (40) de la zone de couverture (16).

7. Dispositif de conduite de fluide (10) selon l'une quelconque des revendications précédentes,
**caractérisé en ce que** le manchon de raccordement (14) et le tuyau en plastique (12) sont soudés ensemble dans la zone du couvercle (16).

8. Dispositif de conduite de fluide (10) selon l'une quelconque des revendications précédentes,
**caractérisé en ce que** le manchon de raccordement (14) et/ou le tuyau en plastique (12) sont transparents dans la zone de recouvrement (16), au moins par sections.

9. Climatisation pour la climatisation d'un bâtiment ou d'un véhicule, avec
- un dispositif de conduite de fluide (10) ;
**caractérisé en ce que** le dispositif de conduite de fluide (10) est conçu selon l'une des revendications ci-dessus.
